# EUROPÄISCHE PATENTANMELDUNG

(11) **EP 4 019 177 A1**
(43) Veröffentlichungstag der Anmeldung: **29.06.2022**
(21) Anmeldenummer: 20216264.0
(22) Anmeldetag: 22.12.2020
(51) Int. Cl.: B23K 9/02, B23K 9/12, B23K 26/24, G05B 19/401

(54) **VERFAHREN UND VORRICHTUNG ZUR QUALITÄTSBEURTEILUNG EINES BEARBEITUNGSPROZESSES**

(71) Anmelder: FRONIUS INTERNATIONAL GmbH, 4643 Pettenbach (AT)
(72) Erfinder: ENNSBRUNNER, Helmut, 4643 Pettenbach (AT)
(74) Vertreter: SONN Patentanwälte OG

(57) **Zusammenfassung**

Die Erfindung betrifft ein Verfahren und eine Vorrichtung (1) zur Qualitätsbeurteilung eines Bearbeitungsprozesses, bei dem ein Werkstück (W) mit bestimmten Bearbeitungsparametern (Pᵢ(x)) entlang einer Bearbeitungsbahn (X) bearbeitet wird, wobei das Bearbeitungsergebnis (R(x)) des Bearbeitungsprozesses entlang der Bearbeitungsbahn (X) mit zumindest einem Sensor (2) vermessen und zumindest ein Sensorsignal (Sⱼ(x)) aufgenommen wird und aus zumindest einem Sensorsignal (Sⱼ(x)) zumindest ein Qualitätsparameter (Qₖ(x)) ermittelt wird und der zumindest eine Qualitätsparameter (Qₖ(x)) zur Beurteilung der Qualität des Bearbeitungsergebnisses (R(x)) des Bearbeitungsprozesses mit vorgegebenen Qualitätsparameter-Grenzwerten (Q_{k,o}(x), Q_{k,u}(x)) verglichen wird. Erfindungsgemäß werden bei der Beurteilung der Qualität des Bearbeitungsergebnisses (R(x)) des Bearbeitungsprozesses vorgenommene Abweichungen der Bearbeitungsparameter (ΔPᵢ(x)) von den Sollwerten der Bearbeitungsparameter (P_{i,soll}(x)) während der Bearbeitung der Bearbeitungsbahn (X) des Werkstücks (W) entlang der Bearbeitungsbahn (X) automatisch berücksichtigt, indem die Qualitätsparameter-Grenzwerte (Q'_{k,o}(x), Q'_{k,u}(x)) an die Abweichungen der Bearbeitungsparameter (ΔPᵢ(x)) angepasst werden.

## Beschreibung

Die Erfindung betrifft ein Verfahren zur Qualitätsbeurteilung eines Bearbeitungsprozesses, bei dem ein Werkstück mit bestimmten Bearbeitungsparametern entlang einer Bearbeitungsbahn bearbeitet wird, wobei das Bearbeitungsergebnis des Bearbeitungsprozesses entlang der Bearbeitungsbahn mit zumindest einem Sensor vermessen und zumindest ein Sensorsignal aufgenommen wird und aus zumindest einem Sensorsignal zumindest ein Qualitätsparameter ermittelt wird und der zumindest eine Qualitätsparameter zur Beurteilung der Qualität des Bearbeitungsergebnisses des Bearbeitungsprozesses entlang der Bearbeitungsbahn mit vorgegebenen Qualitätsparameter-Grenzwerten verglichen wird.

Weiters betrifft die Erfindung eine Vorrichtung zur Qualitätsbeurteilung eines Bearbeitungsprozesses eines Werkstücks mit bestimmten Bearbeitungsparametern entlang einer Bearbeitungsbahn.

Unter Bearbeitungsprozesse fallen insbesondere Fügeprozesse, wie zum Beispiel Schweiß- oder Lötprozesse, bei welchen Werkstücke miteinander verbunden oder Werkstücke beschichtet werden, aber auch Oberflächenbehandlungsprozesse, wie zum Beispiel Plasmabearbeitungsprozesse, bei welchen Werkstücke mit Plasma bearbeitet werden, um diese auf nachfolgende Bearbeitungen vorzubereiten. Beispielsweise kann die Oberfläche von Werkstücken vor dem Lackieren mit Plasma bearbeitet werden, um die Oberfläche von Rückständen zu befreien und/oder die Haftung der Lackschicht zu verbessern.

Es ist hinlänglich bekannt, die Qualität eines Bearbeitungsprozesses zu überwachen bzw. zu beurteilen, um fehlerhafte Werkstücke ausscheiden zu können oder Bearbeitungsparameter zur Verbesserung der Qualität entsprechend anzupassen. Zu diesem Zweck werden Bearbeitungsbahnen nach dem Bearbeitungsprozess begutachtet und daraus die Qualität des Bearbeitungsprozesses beurteilt. Die Qualitätsbeurteilung kann im einfachsten Fall in Form einer visuellen Begutachtung durch fachkundiges Personal erfolgen. Üblicherweise wird das Bearbeitungsergebnis des Bearbeitungsprozesses entlang der Bearbeitungsbahn aber automatisch mit entsprechenden Sensoren vermessen und aus den Sensorsignalen zumindest ein Qualitätsparameter ermittelt. Zur Beurteilung der Qualität wird der zumindest eine Qualitätsparameter mit vorgegebenen Qualitätsparameter-Grenzwerten verglichen. Beispielsweise kann eine Schweißnaht als Bearbeitungsbahn eines Schweißprozesses nach dem Schweißprozess mit einer Kamera vorzugsweise mit Beleuchtung vermessen werden und daraus mit entsprechender Bildverarbeitungsalgorithmen die Nahtbreite und Nahtüberhöhung der Schweißnaht ermittelt und daraus ein Qualitätsparameter abgeleitet werden. Je nach Bearbeitungsaufgabe bzw. Schweißaufgabe können unterschiedliche Qualitätsparameter zur Definition der Qualität der Schweißnaht herangezogen werden. Beispielsweise kann es bei einer sichtbaren Schweißnaht neben den mechanischen Eigenschaften der Schweißnaht auch darauf ankommen, dass die Schweißnaht möglichst schmal und regelmäßig ausgebildet ist, wohingegen es bei einer nicht sichtbaren Schweißnaht mehr auf die Festigkeit der Verbindung und somit auf eine ausreichende Einbrandtiefe ankommen kann. Der für den jeweiligen Bearbeitungsprozess geeignete zumindest eine Qualitätsparameter wird entsprechend festgelegt und dann mit bestimmten Qualitätsparameter-Grenzwerten, beispielsweise einem oberen und unteren Grenzwert verglichen, um die Qualität automatisch beurteilen zu können. Die Qualitätsparameter werden üblicherweise durch Beurteilung von optimal bearbeiteten Werkstücken mit IO ("in Ordnung")-Bearbeitungsbahnen ermittelt. Bei Schweißprozessen können beispielsweise die Größe der Einbrandkerbe, das sogenannte a-Maß, die Nahtüberhöhung, der Endkrater am Ende der Schweißnaht, etc. als Qualitätsparameter herangezogen werden.

Die EP 3 566 806 A1 beschreibt ein Schweißverfahren als Bearbeitungsprozess, bei welchem für die Erzielung bestimmter Qualitätskriterien automatisch optimale Schweißparameter, welche anhand von Testschweißungen an Testwerkstücken ermittelt wurden, für den Schweißprozess verwendet werden. Die Ermittlung der optimalen Schweißparameter für die jeweilige Schweißaufgabe erfolgt über das Optimum eines berechneten Gütefunktionals über die jeweiligen optimalen Schweißparameter der Testschweißungen.

Die EP 1 642 366 B1 und die WO 00/35622 A1 beschreiben Verfahren zur Qualitätsüberwachung von Schweißprozesses, wobei Informationen über die hergestellte Schweißnaht mit vorgegebenen Werten verglichen und bei Abweichung die Schweißparameter entsprechend angepasst werden oder im Fall zu großer Abweichungen eine Warnung ausgegeben wird. Hierbei erfolgt eine Regelung der Bearbeitungsparameter auf vorgegebene Sollwerte.

Bei bekannten Qualitätsbeurteilungssystemen von Bearbeitungsprozessen, insbesondere Schweißprozessen wird überprüft, ob bestimmte Kriterien innerhalb vorgegebener Grenzen liegen. Beispielsweise wird eine hergestellte Schweißnaht mit einer vorher festgelegten "idealen Schweißnaht" verglichen und daraus die Qualität der hergestellten Schweißnaht beurteilt. Werden beim Bearbeitungsprozess jedoch Bearbeitungsparameter bewusst manuell oder automatisch verändert, findet bei der Qualitätsbeurteilung jedoch keine automatische Anpassung der Qualitätskriterien statt, sondern muss aufwändig manuell durchgeführt werden. Das kann dazu führen, dass die Qualität des Bearbeitungsprozesses als unzureichend beurteilt wird, weil die bewusst vorgenommenen Änderungen der Bearbeitungsparameter während des Bearbeitungsprozesses nicht automatisch berücksichtigt wurden. Ebenso kann die Qualität des Bearbeitungsprozesses positiv beurteilt werden, obwohl das Ergebnis nicht den Qualitätskriterien entspricht. Beispielsweise kann es bei einem Schweißprozess aufgrund von Werkstücktoleranzen notwendig sein, bestimmte Schweißparameter anzupassen. Beispielsweise kann eine durch Toleranzen der Werkstücke oder Spannvorrichtungen auftretende größere Spaltbreite eine Anpassung des Drahtvorschubs und anderer Schweißparameter notwendig machen. Wenn das Qualitätsbeurteilungssystem nicht über die Änderung der Sollwerte der Schweißparameter automatisch informiert wird, kann eine fehlerhafte Beurteilung der Qualität der Schweißnaht resultieren.

Die Aufgabe der vorliegenden Erfindung besteht in der Schaffung eines oben genannten Verfahrens und einer Vorrichtung zur Qualitätsbeurteilung eines Bearbeitungsprozesses, durch welche die beschriebenen Nachteile in Bezug auf eine bewusst vorgenommene Änderung der Bearbeitungsparameter während des Bearbeitungsprozesses nicht auftreten und eine reproduzierbare Aussage über die Qualität des Bearbeitungsprozesses und der bearbeiteten Werkstücke ermöglicht wird. Automatische Qualitätsbeurteilungssysteme sollen auch im Falle von bewusst manuell oder automatisch vorgenommenen Abweichungen der Bearbeitungsparameter eingesetzt werden können und zuverlässige Aussagen über die Qualität des Bearbeitungsprozesses bzw. des bearbeiteten Werkstücks treffen können.

Gelöst wird die erfindungsgemäße Aufgabe in verfahrensmäßiger Hinsicht dadurch, dass bei der Beurteilung der Qualität des Bearbeitungsprozesses vorgenommene Abweichungen der Bearbeitungsparameter von den Sollwerten während der Bearbeitung des Werkstücks entlang der Bearbeitungsbahn automatisch berücksichtigt werden, indem die Qualitätsparameter-Grenzwerte an die Abweichungen der Bearbeitungsparameter angepasst werden. Das erfindungsgemäße Verfahren sieht also vor, dass dem Qualitätsbeurteilungssystem die Istwerte der Bearbeitungsparameter während des Bearbeitungsprozesses mitgeteilt werden, wodurch eine automatische Berücksichtigung bewusst vorgenommener Änderungen von den Sollwerten der Bearbeitungsparameter bei der Beurteilung der Qualität des Bearbeitungsprozesses stattfindet, indem die Qualitätsparameter-Grenzwerte entsprechend an die Abweichungen der Bearbeitungsparameter angepasst werden. Dadurch kann die Qualität der bearbeiteten Werkstücke zuverlässiger beurteilt und beispielsweise ein ungerechtfertigter Ausschuss von Werkstücken, welche als qualitativ minderwertig beurteilt werden, oder unzulässigerweise positiv beurteilte Werkstücke, obgleich diese den Qualitätskriterien nicht entsprechen, verhindert werden. Wichtig ist, dass nur bewusste oder beabsichtigte Abweichungen der Bearbeitungsparameter berücksichtigt werden und keine störungsbedingten Abweichungen. Als beabsichtigte Abweichungen gelten manuell vorgenommene Änderungen der Sollwerte der Bearbeitungsparameter oder automatisch vorgenommene Änderungen der Sollwerte der Bearbeitungsparameter infolge adaptiver Bearbeitungsprozesse. Sollwerte der Bearbeitungsparameter können Einstell-Parameter, wie zum Beispiel ein einzustellender mittlerer Schweißstrom oder ein mittlerer Drahtvorschub sein, auch wenn diese Bearbeitungsparameter während der Bearbeitung von diesen eingestellten Werten abweichen. Die bewusst vorgenommenen Abweichungen der Bearbeitungsparameter von den Sollwerten können standardmäßig oder nur im Falle des Auftretens an die Stelle, welche die Qualitätsbeurteilung vornimmt, übermittelt werden. Durch die Berücksichtigung der Abweichungen der Bearbeitungsparameter von den Sollwerten und eine Anpassung der Qualitätsparameter-Grenzwerte an die Abweichungen der Bearbeitungsparameter kann die Zuverlässigkeit der Qualitätsbeurteilung erhöht werden. Die Auswirkungen geänderter Bearbeitungsparameter auf die Qualitätsparameter können je nach Art der Bearbeitung sehr unterschiedlich sein. Der Zusammenhang zwischen Abweichungen der Bearbeitungsparameter und Änderungen der Qualitätsparameter zur Beurteilung der Qualität des Bearbeitungsprozesses bzw. des Bearbeitungsergebnisses können anhand von Testbearbeitungen ermittelt und in Tabellen oder funktionalen Zusammenhängen gespeichert werden. Durch die automatische Berücksichtigung während der Qualitätsbeurteilung ist es möglich, dass Qualitätsbeurteilungssysteme auch bei geänderten Bearbeitungsparametern aufgrund üblicher Toleranzen der Werkstücke eingesetzt werden können und zuverlässige Ergebnisse liefern.

Die vorgenommenen Abweichungen der Bearbeitungsparameter können von den Sollwerten während der Bearbeitung des Werkstücks entlang der Bearbeitungsbahn durch Vergleich der übermittelten Istwerte der Bearbeitungsparameter und übermittelten Sollwerte der Bearbeitungsparameter ermittelt werden. Dabei bezeichnen die Sollwerte jene vor den vorgenommenen Abweichungen, die Istwerte jene nach den vorgenommenen Änderungen. Bei diesem sogenannten "Online-Verfahren" werden die Abweichungen der Bearbeitungsparameter quasi in Echtzeit ermittelt und übermittelt, sodass die Qualitätsüberwachung des Bearbeitungsprozesses entlang der Bearbeitungsbahn jederzeit mit den realen Daten vorgenommen werden kann. Zu den Abweichungen der Bearbeitungsparameter zählen auch systembedingte Abweichungen, welche beispielsweise beim Tausch von Verschleißteilen der Bearbeitungsvorrichtung auftreten können. Beispielsweise wird die Schweißspannung nach dem Tausch eines Kontaktrohrs eines Schweißbrenners verringert sein. Wenn bei der Beurteilung der Qualität des Bearbeitungsprozesses auch diese beabsichtigten Änderungen der Bearbeitungsparameter und die damit verbundenen geänderten Qualitätsparameter-Grenzwerte berücksichtigt werden, resultiert eine zuverlässigere Aussage über die Qualität des Bearbeitungsprozesses bzw. des während des Bearbeitungsprozesses bearbeiteten Werkstücks.

Alternativ oder zusätzlich können die vorgenommenen Abweichungen der Bearbeitungsparameter von den Sollwerten und bzw. oder die übermittelten Istwerte der Bearbeitungsparameter und die übermittelten Sollwerte der Bearbeitungsparameter auch während der Bearbeitung des Werkstücks entlang der Bearbeitungsbahn aufgezeichnet und später zur automatischen Berücksichtigung bei der Beurteilung der Qualität des Bearbeitungsprozesses entlang der Bearbeitungsbahn herangezogen werden. Bei diesem sogenannten "Offline-Verfahren" werden die Abweichungen der Bearbeitungsparameter und die damit assoziierten Grenzwerte der Qualitätsparameter für eine spätere Verwendung aufgezeichnet und gespeichert, sodass sie bei der Durchführung der Qualitätsüberwachung des Bearbeitungsprozesses herangezogen werden können.

Gemäß einem weiteren Merkmal der Erfindung werden die an die Abweichungen der Bearbeitungsparameter angepassten Qualitätsparameter-Grenzwerte aus gespeicherten Qualitätsparameter-Grenzwerten für bestimmte Bearbeitungsparameter ermittelt. Wenn für verschiedenste Bearbeitungssituationen und verschiedenste Bearbeitungsparameter Grenzwerte für die resultierenden Qualitätsparameter, über die das Bearbeitungsergebnis beurteilt werden kann, abgelegt sind, können die Qualitätsparameter-Grenzwerte aus diesen abgespeicherten Werten in Abhängigkeit der jeweiligen realen Bearbeitungsparameter ermittelt werden. Als Qualitätsparameter-Grenzwerte können obere und untere Qualitätsparameter-Grenzwerte festgelegt werden oder auch ein Qualitätsparameter-Mittelwert mit einer bestimmten maximalen Qualitätsparameter-Schwankungsbreite festgelegt werden. Die gespeicherten Qualitätsparameter-Grenzwerte können im gleichen Speicher bzw. in der gleichen Datenbank, wie die Bearbeitungsparameter abgelegt sein oder auch in anderen Speichern bzw. Datenbanken.

Die gespeicherten Qualitätsparameter-Grenzwerte können beispielsweise aus Testbearbeitungsprozessen bzw. Bearbeitungsversuchen, beispielsweise Testschweißprozessen bzw. Schweißversuchen, bei bestimmten Bearbeitungsparametern und bestimmten Störungen ermittelt werden.

Die an die Abweichungen der Bearbeitungsparameter angepassten Qualitätsparameter-Grenzwerte werden vorzugsweise durch Interpolation der gespeicherten Qualitätsparameter-Grenzwerte für bestimmte Bearbeitungsparameter ermittelt. Durch derartige Interpolationsverfahren können die jeweiligen Qualitätsparameter-Grenzwerte für verschiedenste Bearbeitungsparameter rasch und ohne großen Rechenaufwand ermittelt werden.

Vorzugsweise wird bei der Ermittlung zumindest eines Qualitätsparameters aus zumindest einem Sensorsignal zur Vermessung des Bearbeitungsergebnisses die Abweichung zumindest eines Bearbeitungsparameters berücksichtigt. Beispielsweise kann bei der Ermittlung der Nahtbreite einer Schweißnaht als Qualitätsparameter eines Schweißprozesses eine Abweichung der Vorschubgeschwindigkeit des Schweißdrahtes berücksichtigt werden, welche einen wesentlichen Einfluss auf die Nahtbreite hat.

Bei der Beurteilung der Qualität des Bearbeitungsprozesses können zusätzliche Umgebungsparameter, wie zum Beispiel die Werkstücktemperatur, Umgebungstemperatur, Luftfeuchtigkeit, oder dgl. berücksichtigt werden. Durch die Einbeziehung solcher Umgebungsparameter, welche auch von der Bearbeitungsbahn abhängig sein können, wird das Ergebnis der Qualitätsbeurteilung noch weiter verbessert.

Das Bearbeitungsergebnis entlang der Bearbeitungsbahn kann mithilfe nicht zerstörender Messmethoden, beispielsweise optischen Sensoren, insbesondere Laserscannern, Kameras oder dgl., Röntgensensoren, und bzw. oder Temperatursensoren vermessen und zumindest ein Sensorsignal aufgenommen werden. Eine Aufnahme des Bearbeitungsergebnisses mithilfe nicht zerstörender Messmethoden und vorzugsweise berührungslosen Sensoren hat den Vorteil, dass die Vermessung des Bearbeitungsergebnisses besonders rasch und entlang der gesamten Bearbeitungsbahn vorgenommen werden kann und das bearbeitete Werkstück dabei nicht verändert wird. Bei bestimmten Einflussfaktoren kann es von Vorteil sein, die Vermessung des Bearbeitungsergebnisses entlang der Bearbeitungsbahn unmittelbar nach der Bearbeitung des Werkstücks vorzunehmen. Beispielsweise kann der Temperaturverlauf im Material des Werkstücks unmittelbar nach Durchführung der Bearbeitung eine Aussage über das Materialgefüge des Bearbeitungsergebnisses innerhalb und um die Bearbeitungsbahn liefern. Bei bestimmten Qualitätsparametern kann es auch vorteilhaft sein, die Vermessung des Bearbeitungsergebnisses entlang der Bearbeitungsbahn erst einige Zeit nach der Bearbeitung des Werkstücks vorzunehmen, da sich die Qualität des Bearbeitungsprozesses erst nach dieser Zeit beurteilen lässt.

Alternativ oder zusätzlich kann das Bearbeitungsergebnis entlang der Bearbeitungsbahn auch mithilfe zerstörender Messmethoden, beispielsweise durch Anfertigung von Schnitten durch das Werkstück an verschiedenen Stellen des Bearbeitungsergebnisses entlang der Bearbeitungsbahn und insbesondere durch Anfertigen von Bildern der Oberfläche der Schnitte vermessen und zumindest ein Sensorsignal aufgenommen werden. Beispielsweise können Schliffbilder in bestimmten Abständen des Bearbeitungsergebnisses entlang der Bearbeitungsbahn angefertigt und daraus bestimmte Qualitätsparameter abgeleitet werden. Derartige naturgemäß aufwändigere Messmethoden liefern wesentliche Erkenntnisse auch über den inneren Aufbau des Bearbeitungsergebnisses entlang der Bearbeitungsbahn, welche mit berührungslosen Messmethoden nicht oder nur "schlechter" erfasst werden könnten. Die aufgenommenen Schliffbilder des Bearbeitungsergebnisses entlang der Bearbeitungsbahn können wiederum mit verschiedenen Verfahren analysiert werden, insbesondere mithilfe von Kameras und damit verbundenen Bildverarbeitungsverfahren. Der Einsatz bestimmter Chemikalien kann die Erkennung des Gefüges der Schliffbilder der Bearbeitungsergebnisse verbessern. Auch eine makroskopische Untersuchung von Schliffbildern nach dem Bearbeitungsprozess kann charakteristische Qualitätsparameter liefern. Die Schliffbilder werden analysiert und in Form bestimmter Sensorsignale und in der Folge charakterisierender Qualitätsparameter des Bearbeitungsergebnisses entlang der Bearbeitungsbahn ermittelt und gespeichert. Neben der Herstellung von Schliffbildern sind auch Zugprüfungen, Biegeprüfungen etc. an den Werkstücken denkbar.

Das Bearbeitungsergebnis entlang der Bearbeitungsbahn wird gemäß einem weiteren Merkmal der Erfindung während der Bearbeitung des Werkstücks mit dem zumindest einen Sensor vermessen, wobei die Geschwindigkeit der Vermessung der Bearbeitungsbahn vorzugsweise der Bearbeitungsgeschwindigkeit entspricht. Bei dieser Ausführungsvariante erfolgt die Beurteilung der Qualität des Bearbeitungsprozesses bzw. die Vermessung der Bearbeitungsbahn des Werkstücks unmittelbar oder eine relativ kurze Zeitspanne nach der Bearbeitung des Werkstücks. Dabei ist es von Vorteil, wenn das Qualitätsbeurteilungssystem synchron mit dem Bearbeitungssystem gegenüber dem Werkstück bewegt wird. Beispielsweise kann eine die Bearbeitungsbahn vermessende Kamera auf dem selben Roboterarm, der auch das Bearbeitungswerkzeug trägt, montiert werden und die Bearbeitungsbahn nachlaufend der Bearbeitung des Werkstücks analysieren. In diesem Fall erfolgt die Vermessung des Bearbeitungsergebnisses entlang der Bearbeitungsbahn mit der selben Geschwindigkeit, wie die Bearbeitung des Werkstücks. Natürlich kann auch das Qualitätsbeurteilungssystem und Bearbeitungssystem still stehen und sich das Werkstück während der Bearbeitung bewegen oder sowohl das Qualitätsbeurteilungssystem und Bearbeitungssystem sowie das Werkstück gegeneinander bewegt werden.

Das Bearbeitungsergebnis entlang der Bearbeitungsbahn kann auch nach Fertigstellung der Bearbeitung des Werkstücks mit zumindest einem Sensor vermessen werden, wobei die Geschwindigkeit der Vermessung des Bearbeitungsergebnisses entlang der Bearbeitungsbahn vorzugsweise größer als die Bearbeitungsgeschwindigkeit des Bearbeitungsprozesses ist. Wenn die Vermessung des Bearbeitungsergebnisses entlang der Bearbeitungsbahn unabhängig von der Bearbeitung des Werkstücks erfolgt, kann die Geschwindigkeit der Vermessung gegenüber der Bearbeitungsgeschwindigkeit auch wesentlich höher gewählt werden. Beispielsweise kann das optische Abtasten des Bearbeitungsergebnisses entlang der Bearbeitungsbahn nach der Bearbeitung eines Werkstücks wesentlich schneller erfolgen als die Bearbeitung des Werkstücks selbst. Darüber hinaus können mehrere Durchläufe von Vermessungen des Bearbeitungsergebnisses entlang der Bearbeitungsbahn auch mit verschiedenen Sensoren durchgeführt werden und danach aus den unterschiedlichen Sensorsignalen die Qualitätsparameter ermittelt werden. Weiters kann so mit einer einzigen Vermessungsstation die Beurteilung der Werkstücke von mehreren Bearbeitungsstationen erfolgen.

Bei Überschreiten zumindest eines Qualitätsparameters über einen vorgegebenen Qualitätsparameter-Grenzwert oder angepassten Qualitätsparameter-Grenzwert kann eine Warnung ausgegeben und bzw. oder das Überschreiten gespeichert werden. Die Warnung kann beispielsweise akustisch, optisch oder auch in mechanischer Form über einen Vibrationsmechanismus erfolgen. Dadurch kann auf eine Überschreitung von Qualitätsparametern entsprechend hingewiesen werden. Die Warnung kann auch über entsprechende Kommunikationskanäle an übergeordnete Stellen weitergeleitet werden.

Die Warnung kann in Abhängigkeit des Grades der Überschreitung zumindest eines Qualitätsparameters über einen vorgegebenen Qualitätsparameter-Grenzwert oder einen angepassten Qualitätsparameter-Grenzwert verändert werden. Beispielsweise kann die Lautstärke einer akustischen Warnung oder die Lichtstärke oder Blinkfrequenz einer optischen Warnung an die Größe der Qualitätsabweichung angepasst werden und über die Warnung dem Personal mitgeteilt werden, wie groß die Qualitätsabweichung ist.

Im Falle einer Schweißnaht als Bearbeitungsbahn wird vorzugsweise der Bearbeitungsparameter des Schweißprozesses Schweißstrom, Schweißspannung, Fördergeschwindigkeit eines Schweißdrahts, Anstellwinkel eines Schweißbrenners zum Werkstück, Relativposition eines Schweißbrenners zum Werkstück und bzw. oder die Schweißgeschwindigkeit berücksichtigt. Unter ein solches Schweißverfahren fällt auch ein Lötverfahren, bei dem im Gegensatz zum Schweißen keine oder eine geringere Aufschmelzung des Basismaterials des Werkstücks erfolgt.

Ebenso wird die erfindungsgemäße Aufgabe durch eine oben genannte Vorrichtung zur Qualitätsbeurteilung eines Bearbeitungsprozesses gelöst, welche zur Durchführung des oben genannten Verfahrens eingerichtet ist. Zu den dadurch erzielbaren Vorteilen wird auf die obige Beschreibung des Verfahrens verwiesen. Die Vorrichtung zur Qualitätsbeurteilung ist durch eine entsprechende Verbindung zur Bearbeitungsvorrichtung gekennzeichnet, durch welche die vorgenommenen Änderungen der Bearbeitungsparameter während der Bearbeitung der Vorrichtung zur Qualitätsüberwachung mitgeteilt werden, sodass die Grenzwerte der Qualitätsparameter automatisch an die Abweichungen der Bearbeitungsparameter angepasst werden können.

Die vorliegende Erfindung wird anhand der beigefügten Zeichnungen näher erläutert. Darin zeigen:
- Fig. 1: einen schematischen Bearbeitungsprozess, bei dem ein Werkstück mit bestimmten Bearbeitungsparametern entlang einer Bearbeitungsbahn bearbeitet wird;
- Fig. 2A bis 2D: skizzieren schematisch ein Verfahren zur Qualitätsbeurteilung eines Bearbeitungsprozesses mit verschiedenen Sensoren zur Vermessung des Bearbeitungsergebnisses entlang der Bearbeitungsbahn;
- Fig. 3: zeigt eine schematische Darstellung des erfindungsgemäßen Verfahrens zur Qualitätsbeurteilung eines Bearbeitungsprozesses an einem Werkstück; und
- Fig. 4: ein Beispiel für eine bewusste Abweichung der Bearbeitungsparameter während eines Bearbeitungsprozesses und deren Berücksichtigung bei der Qualitätsbeurteilung des Bearbeitungsprozesses.

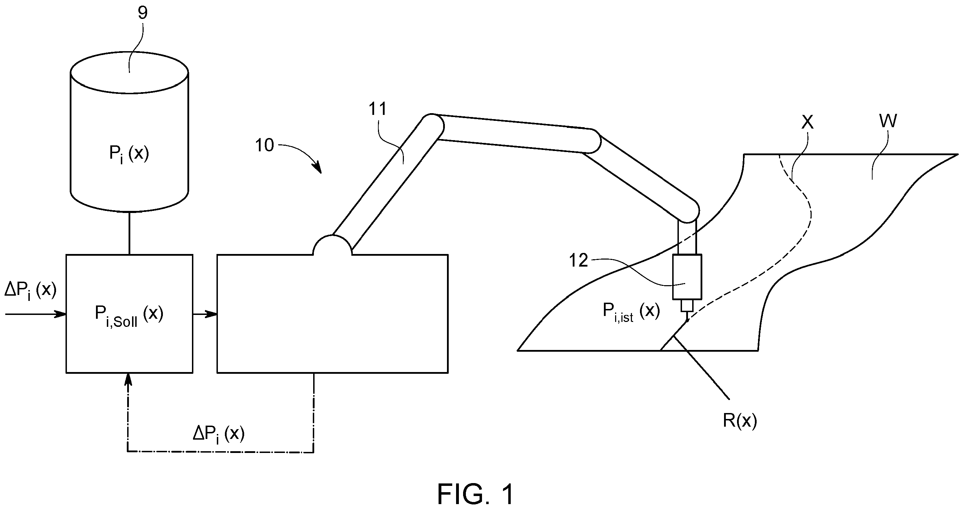

Fig. 1 zeigt einen schematischen Bearbeitungsprozess, bei dem ein Werkstück W mit bestimmten Bearbeitungsparametern Pᵢ(x) entlang einer Bearbeitungsbahn X zur Bildung eines Bearbeitungsergebnisses R(x) bearbeitet wird. Die Bearbeitungsvorrichtung 10 beinhaltet einen Bearbeitungsroboter 11, der den jeweiligen Bearbeitungskopf 12, mit dem das Werkstück W bearbeitet wird, trägt und entlang der Bearbeitungsbahn X zur Bildung des Bearbeitungsergebnisses R(x) führt. Zur Bearbeitung des Werkstücks W werden aus einer Vielzahl möglicher Bearbeitungsparameter Pᵢ(x), welche beispielsweise in einer Datenbank oder einem Speicher 9 hinterlegt sind, bestimmte Sollwerte der Bearbeitungsparameter P_{i,soll}(x) ausgewählt, mit welchen das Werkstück W bearbeitet wird, um ein gewünschtes Bearbeitungsergebnis zu erzielen. Durch einen manuellen Eingriff an der Bearbeitungsvorrichtung 10 oder auch einen automatischen maschinellen Eingriff bei adaptiven Bearbeitungsprozessen (symbolisiert durch die strichpunktierte Linie) kann es während des Bearbeitungsprozesses zu Veränderungen der Sollwerte der Bearbeitungsparameter P_{i,soll}(x) und somit zu gewünschten oder notwendigen Abweichungen der Bearbeitungsparameter ΔPᵢ(x) kommen. Bei einer nachträglichen Qualitätsüberwachung des Bearbeitungsergebnisses R(x) des Bearbeitungsprozesses durch entsprechende Inspektion des bearbeiteten Werkstücks W entlang der Bearbeitungsbahn X werden solche Abweichungen der Bearbeitungsparameter ΔPᵢ(x) von den Sollwerten der Bearbeitungsparameter P_{i,soll}(x) bei bekannten Methoden üblicherweise nicht automatisch berücksichtigt, wodurch es zu falschen Beurteilungen der Qualität der Werkstücke W kommen kann. Dadurch, dass herkömmliche Qualitätskontrollsysteme bei bewusst vorgenommenen Abweichungen der Bearbeitungsparameter ΔPᵢ(x) versagen, weil ja das geänderte Bearbeitungsergebnis R'(x) nicht dem erwarteten Bearbeitungsergebnis R(x) entspricht, muss üblicherweise eine aufwändige manuelle Überprüfung der mit den bewusst geänderten Bearbeitungsparametern ΔPᵢ(x) bearbeiteten Werkstücke W vorgenommen werden.

Bei der Bearbeitungsvorrichtung 10 kann es sich beispielsweise um eine Schweißvorrichtung zur Durchführung eines Fügeprozesses an einem Werkstück W handeln. Dabei wird ein Schweißbrenner an einem Schweißroboter befestigt, mit dem zwei oder mehrere Werkstücke W miteinander verbunden oder auf einem Werkstück W eine Schicht aufgetragen werden kann. Das Bearbeitungsergebnis R(x) ist in diesem Fall eine Schweißnaht zwischen zwei oder mehreren zu verbindenden Werkstücken W oder eine Schweißraupe an der Oberfläche eines Werkstücks W. Weiters kann die Bearbeitungsvorrichtung 10 auch durch eine Vorrichtung zur Behandlung der Oberfläche eines Werkstücks W mit einem Plasmabrenner, eine Lackiervorrichtung und vieles mehr, gebildet sein. Je nach Bearbeitungsprozess unterscheidet sich das Bearbeitungsergebnis R(x) entlang der Bearbeitungsbahn X und auch die Beurteilung der Qualität des Bearbeitungsprozesses und des jeweiligen Bearbeitungsergebnisses R(x) entlang der Bearbeitungsbahn X.

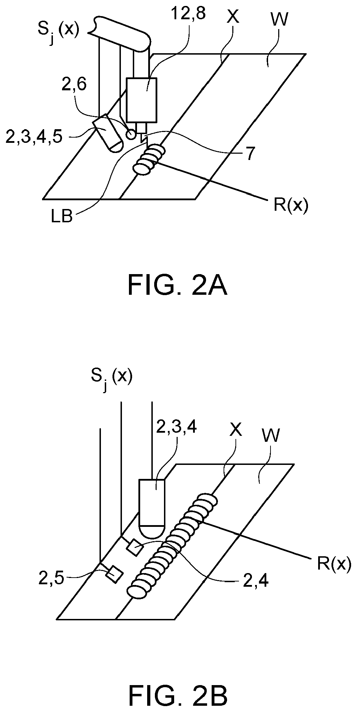

Die Figuren 2A bis 2D zeigen schematisch ein Verfahren zur Qualitätsbeurteilung eines Bearbeitungsprozesses mit verschiedenen Sensoren 2 zur Vermessung des jeweiligen Bearbeitungsergebnisses R(x) des Bearbeitungsprozesses entlang der Bearbeitungsbahn X anhand eines Schweißprozesses als Bearbeitungsprozess.

Fig. 2A zeigt eine Qualitätsbeurteilung des Bearbeitungsprozesses, welche während oder unmittelbar nach der Bearbeitung des Werkstücks W erfolgt (sogenannte "Online"-Qualitätsbeurteilung). Dementsprechend sind die Sensoren 2 zum Vermessen des Bearbeitungsergebnisses R(x) des Bearbeitungsprozesses entlang der Bearbeitungsbahn X des Werkstücks W am oder hinter dem Bearbeitungskopf 12 angeordnet, sodass das Bearbeitungsergebnis R(x) entlang der Bearbeitungsbahn X unmittelbar nach dem Bearbeitungsprozess vermessen werden kann. Beim Bearbeitungskopf 12 kann es sich beispielsweise um einen Schweißbrenner 8 handeln, über den ein abschmelzender Schweißdraht 7 zum Werkstück W zur Durchführung eines Fügeprozesses oder Auftragsschweißprozesses zugeführt wird. Zwischen dem Ende des Schweißdrahts 7 und dem Werkstück W brennt ein Lichtbogen LB, der den Schweißdraht 7 und das Werkstück W aufschmilzt. Als Sensoren 2 zur Vermessung des Bearbeitungsergebnisses R(x) entlang der Bearbeitungsbahn X des Werkstücks W kommen beispielsweise optische Sensoren 3, Kameras 4, Röntgensensoren 5 oder Temperatursensoren 6 in Frage, welche das Bearbeitungsergebnis R(x) entlang der Bearbeitungsbahn X vermessen und entsprechende Sensorsignale Sⱼ(x) in Abhängigkeit der Stelle entlang der Bearbeitungsbahn X liefern. Bei der "Online"-Qualitätsbeurteilung entspricht die Geschwindigkeit der Vermessung des Bearbeitungsergebnisses entlang der Bearbeitungsbahn X mit den Sensoren 2 vorzugsweise der Geschwindigkeit des Bearbeitungsprozesses, also der Bearbeitungsgeschwindigkeit, beispielsweise der Schweißgeschwindigkeit vₛ(x) bei einem Schweißprozess.

Alternativ oder zusätzlich zur "Online"-Qualitätsbeurteilung kann gemäß Fig. 2B auch eine "Offline"-Qualitätsbeurteilung stattfinden, bei der das Werkstück W bzw. das Bearbeitungsergebnis R(x) entlang der Bearbeitungsbahn X nach dem erfolgten Bearbeitungsprozess mit entsprechenden Sensoren 2, beispielsweise optischen Sensoren 3, Kameras 4, oder Röntgensensoren 5 oder dgl. vermessen wird und entsprechende Sensorsignale Sⱼ(x) geliefert werden. Beim "Offline"-Qualitätsbeurteilung kann die Geschwindigkeit der Vermessung des Bearbeitungsergebnisses R(x) entlang der Bearbeitungsbahn X mit den Sensoren 2 nach Fertigstellung der Bearbeitung des Werkstücks W größer als die Bearbeitungsgeschwindigkeit sein. Dennoch stellt die "Offline"-Qualitätsbeurteilung im Gegensatz zur "Online"-Qualitätsbeurteilung einen zusätzlichen zeitlichen Aufwand dar.

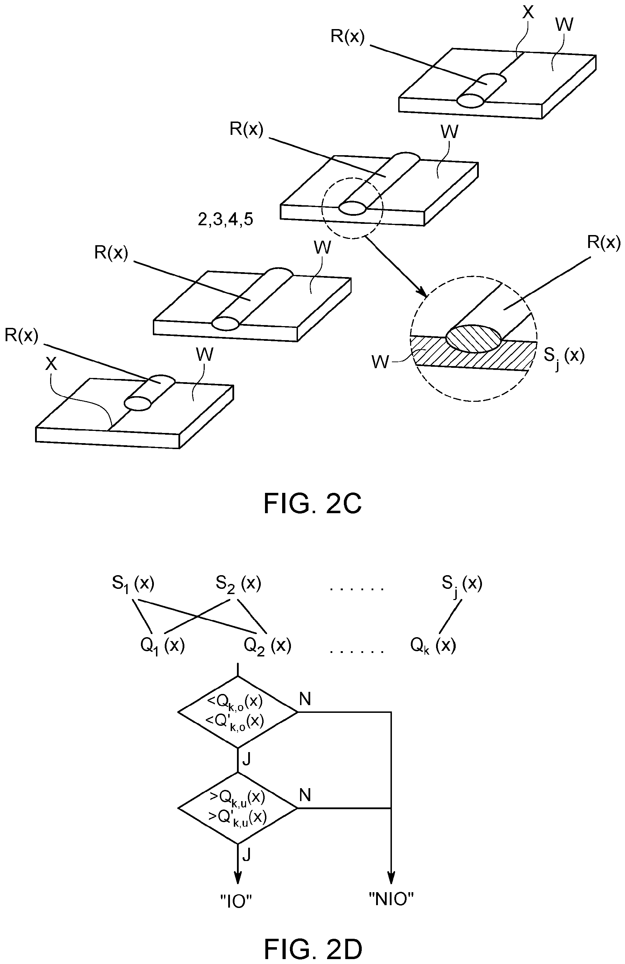

In Fig. 2C ist eine Methode der Qualitätsbeurteilung des Bearbeitungsprozesses skizziert, bei der das Werkstück W zur Analyse des Bearbeitungsergebnisses R(x) entlang der Bearbeitungsbahn X zerstört wird, indem an mehreren Stellen des Bearbeitungsergebnisses R(x) entlang der Bearbeitungsbahn X Schliffbilder des Werkstücks W im Bereich des Bearbeitungsergebnisses R(x) hergestellt werden. Diese Schliffbilder können mit entsprechenden Sensoren 2 und bildverarbeitenden Methoden vermessen werden und Sensorsignale Sⱼ(x) liefern, welche ebenfalls Aufschluss über die Qualität des Bearbeitungsprozesses am Werkstück W und des Bearbeitungsergebnisses R(x) an gewissen Stellen entlang der Bearbeitungsbahn X geben. Beispielsweise kann ein solches Schliffbild bei einem Schweißprozess Hinweise über die Einbrandtiefe der Schweißnaht als Bearbeitungsergebnis R(x) liefern.

Wie in Fig. 2D veranschaulicht, werden aus den verschiedenen Sensorsignalen Sⱼ(x) des Bearbeitungsergebnisses R(x) Qualitätsparameter Qₖ(x) ermittelt, welche die Qualität des Bearbeitungsergebnisses R(x) des Bearbeitungsprozesses für die jeweilige Bearbeitungsaufgabe charakterisieren. Je nach Bearbeitungsaufgabe können verschiedene und verschieden viele Qualitätsparameter Qₖ(x) existieren, welche die Qualität des Bearbeitungsergebnisses R(x) entlang der Bearbeitungsbahn X quantifizieren. Zur Beurteilung der Qualität wird nun der zumindest eine Qualitätsparameter Qₖ(x) mit vorgegebenen Qualitätsparameter-Grenzwerten, z.B. einem oberen Qualitätsparameter-Grenzwert Q_{k,o}(x) und einem unteren Qualitätsparameter-Grenzwert Q_{k,u}(x) verglichen. Bei Überschreitung der Qualitätsparameter-Grenzwerte Q_{k,o}(x), Q_{k,u}(x) wird die Qualität als nicht gegeben angenommen, was mit "NIO" (nicht in Ordnung) gekennzeichnet wird. Befinden sich alle Qualitätsparameter Qₖ(x) innerhalb ihrer Qualitätsparameter-Grenzwerte Q_{k,o}(x), Q_{k,u}(x), so wird die Qualität des Bearbeitungsprozesses als erfüllt angesehen und das Werkstück W für "IO" (in Ordnung) eingestuft. Gibt es während des Bearbeitungsprozesses bewusste manuelle oder automatisch vorgenommene Abweichungen der Bearbeitungsparameter ΔPᵢ(x) so ändert sich konsequenterweise das Bearbeitungsergebnis R'(x). Wird nun dieses geänderte Bearbeitungsergebnis R'(x) mit den Sensoren 2 vermessen und werden daraus Qualitätsparameter Q'k(x) ermittelt und diese mit den ursprünglichen Qualitätsparameter-Grenzwerten Q_{k,o}(x), Q_{k,u}(x) verglichen, so resultieren im Allgemeinen falsche Qualitätsaussagen. Daher ist es das Anliegen der vorliegenden Erfindung, die bewusst vorgenommenen Abweichungen der Bearbeitungsparameter ΔPᵢ(x) während des Bearbeitungsprozesses bei der Beurteilung der Qualität des Bearbeitungsprozesses und des geänderten Bearbeitungsergebnisses R'(x) automatisch zu berücksichtigen. Dies wird vorzugsweise in angepassten und geänderten Qualitätsparameter-Grenzwerten Q'_{k,o}(x), Q'_{k,u}(x) resultieren.

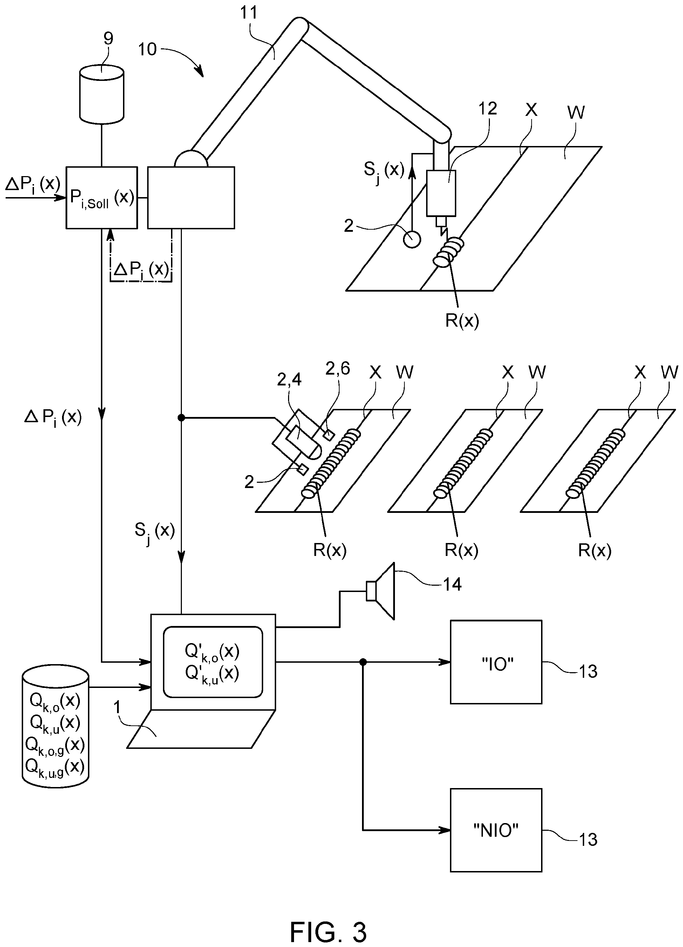

In Fig. 3 ist eine schematische Darstellung des erfindungsgemäßen Verfahrens zur Qualitätsbeurteilung eines Bearbeitungsprozesses und des Bearbeitungsergebnisses R(x) entlang der Bearbeitungsbahn X an einem Werkstück W dargestellt. Die Vorrichtung 1 zur Qualitätsbeurteilung des Bearbeitungsprozesses empfängt die verschiedenen Sensorsignale Sⱼ(x), welche während des Bearbeitungsprozesses durch Sensoren 2, die am Bearbeitungskopf 12 der Bearbeitungsvorrichtung 10 montiert sind und das Bearbeitungsergebnis R(x) entlang der Bearbeitungsbahn X vermessen ("Online"-Qualitätsbeurteilung). Alternativ oder zusätzlich werden der Vorrichtung 1 zur Qualitätsbeurteilung die Sensorsignale Sⱼ(x) geliefert, welche nach dem Bearbeitungsprozess durch Vermessung der Bearbeitungsergebnisse R(x) entlang der Bearbeitungsbahnen X mit entsprechenden Sensoren 2 aufgenommen wurden. Aus dem zumindest einen Sensorsignal Sⱼ(x) wird zumindest ein Qualitätsparameter Qₖ(x) ermittelt und der zumindest eine Qualitätsparameter Qₖ(x) zur Beurteilung der Qualität des Bearbeitungsprozesses und des Bearbeitungsergebnisses R(x) entlang der Bearbeitungsbahn X mit vorgegebenen Qualitätsparameter-Grenzwerten Q_{k,o}(x), Q_{k,u}(x) verglichen. Bei Überschreitung der Qualitätsparameter-Grenzwerte Q_{k,o}(x), Q_{k,u}(x) wird die Qualität als nicht erfüllt angenommen und das Werkstück als "NIO" (nicht in Ordnung) eingestuft, was beispielsweise an einer Anzeige 13 angezeigt wird. Befinden sich alle Qualitätsparameter Qₖ(x) innerhalb ihrer Qualitätsparameter-Grenzwerte Q_{k,o}(x), Q_{k,u}(x), so wird die Qualität des Bearbeitungsprozesses und des Bearbeitungsergebnisses R(x) als erfüllt angesehen und das Werkstück W für "IO" (in Ordnung) eingestuft und beispielsweise an der Anzeige 13 entsprechend angezeigt. Zusätzlich kann bei Überschreitung eines Qualitätsparameter-Grenzwerts Q_{k,o}(x), Q_{k,u}(x) auch eine Warnung ausgegeben werden, beispielsweise eine akustische Warnung an einem Lautsprecher 14.

Erfindungsgemäß werden bei der Beurteilung der Qualität des Bearbeitungsprozesses und des Bearbeitungsergebnisses R(x) entlang der Bearbeitungsbahn X vorgenommene Abweichungen der Bearbeitungsparameter ΔPᵢ(x) von den Sollwerten der Bearbeitungsparameter P_{i,soll}(x) während der Bearbeitung der Bearbeitungsbahn X des Werkstücks W automatisch berücksichtigt, was durch die Verbindung der Bearbeitungsvorrichtung 10 mit der Vorrichtung 1 zur Qualitätsbeurteilung des Bearbeitungsprozesses veranschaulicht wird. Dies kann beispielsweise dadurch erfolgen, dass aufgrund der geänderten Situation auch angepasste Qualitätsparameter-Grenzwerte Q'_{k,o}(x), Q'_{k,u}(x) festgelegt werden, welche zu den Abweichungen der Bearbeitungsparameter ΔPᵢ(x) hinterlegt oder durch entsprechende Berechnungsvorschriften festgelegt werden. Der automatischen Beurteilung der Qualität des Bearbeitungsprozesses und des geänderten Bearbeitungsergebnisses R'(x) werden somit automatisch die angepassten Qualitätsparameter-Grenzwerte Q'_{k,o}(x), Q'_{k,u}(x) zugrunde gelegt, wodurch die Zuverlässigkeit der Qualitätsüberwachung gesteigert werden kann. Weiters wird dadurch die Qualitätsbeurteilung für adaptive Bearbeitungssysteme geeignet. Dadurch können auch Werkstücke W, die aufgrund üblicherweise vorkommender Toleranzen mit geänderten Bearbeitungsparametern entsprechend der Abweichungen der Bearbeitungsparameter ΔPᵢ(x) bearbeitet werden und andere Bearbeitungsergebnisse R'(x) als ideale Werkstücke W liefern, durch das Qualitätsbeurteilungssystem für "IO" (in Ordnung) befunden werden, ohne dass eine aufwändige manuelle Kontrolle vorgesehen werden muss. Die angepassten Qualitätsparameter-Grenzwerte Q'_{k,o}(x), Q'_{k,u}(x) können aus gespeicherten Qualitätsparameter-Grenzwerten Q_{k,o,g}(x), Q_{k,u,g}(x), welche aus Testbearbeitungsprozessen bei bestimmten Bearbeitungsparametern Pᵢ(x) ermittelt werden, festgelegt werden, beispielsweise durch Interpolation der gespeicherten Qualitätsparameter-Grenzwerte Q_{k,o,g}(x), Q_{k,u,g}(x).

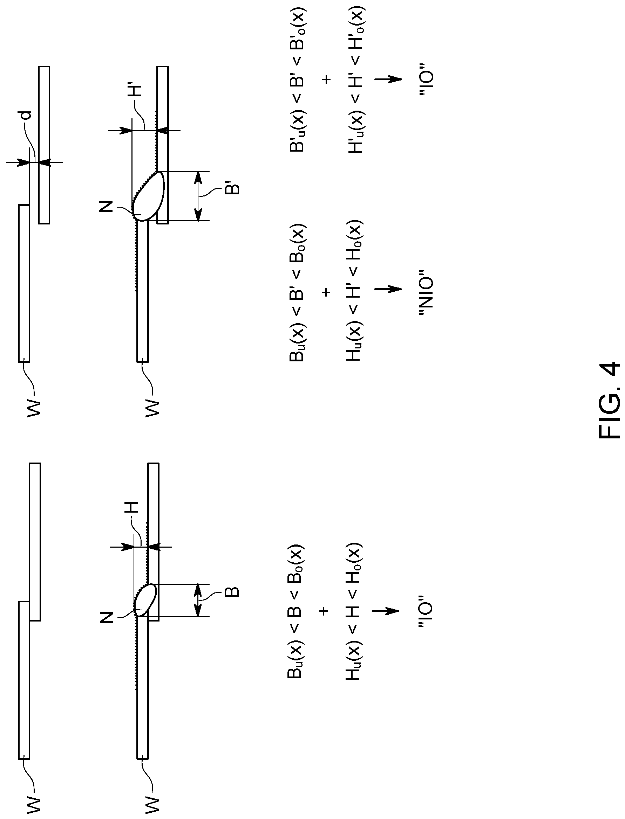

Figur 4 zeigt ein Beispiel für eine bewusste Abweichung der Bearbeitungsparameter ΔPᵢ(x) während eines Bearbeitungsprozesses und deren Berücksichtigung bei der Qualitätsbeurteilung des Bearbeitungsprozesses anhand eines Schweißprozesses. Im linken Teil der Abbildung ist ein Werkstück W im Schnittbild oben vor der Bearbeitung und darunter nach der Bearbeitung bzw. nach dem Schweißprozess dargestellt. Es handelt sich hier um die Durchführung einer Überlapp-Schweißnaht an zwei überlappend angeordneten Werkstücken W. Üblicherweise liegen die Werkstücke W ohne Spalt übereinander auf und der Schweißprozess wird mit voreingestellten Schweißparametern vorgenommen. Bei der Qualitätsüberwachung wird beispielsweise die Breite B(x) und die Höhe H(x) der Schweißnaht N als Qualitätsparameter entlang der Bearbeitungsbahn X bestimmt und mit vorgegebenen Grenzwerten für die Breite Bₒ(x), Bᵤ(x) und Höhe Hₒ(x), Hᵤ(x) der Schweißnaht N verglichen. Sind die Bedingungen Bᵤ(x) < B < Bₒ(x) und Hᵤ(x) < H < Hₒ(x) erfüllt, wird die Qualität des Bearbeitungsprozesses positiv beurteilt und das Werkstück als "IO" klassifiziert.

In der Praxis treten meist Toleranzen auf, welche beispielsweise zu einem Spalt d zwischen den Werkstücken W führen können, wie im rechten Teil der Figur 4 dargestellt. Während des Schweißprozesses wird auf diese geänderten Bedingungen beispielsweise manuell oder automatisch (bei einem adaptiven Schweißprozess) reagiert, indem beispielsweise die Fördergeschwindigkeit v_{d}(x) des Schweißdrahts und der Schweißstrom I(x) erhöht und die Schweißgeschwindigkeit vₛ(x) verringert wird. Es resultiert eine Schweißnaht N mit größerer Breite B' und größerer Höhe H' als bei der Bearbeitung des Werkstücks W ohne Spalt d (linker Teil der Figur 4). Erfolgt die Qualitätsbeurteilung ohne automatische Berücksichtigung der geänderten Bedingungen und die bewusst vorgenommenen Änderungen der Bearbeitungsparameter, so würde die Breite B' und Höhe H' der Schweißnaht N als unzulässig bewertet und die Qualität des Bearbeitungsprozesses negativ beurteilt und das Werkstück beispielsweise als Ausschuss ("NIO": nicht in Ordnung) gekennzeichnet oder zur manuellen Überprüfung oder Nachbearbeitung geschickt werden.

Beim erfindungsgemäßen Verfahren zur Qualitätsbeurteilung werden nunmehr die vorgenommenen Abweichungen der Bearbeitungsparameter ΔPᵢ(x) berücksichtigt, indem der Qualitätsbeurteilung die bewusst vorgenommenen Änderungen oder Abweichungen der Bearbeitungsparameter ΔPᵢ(x) (hier beispielsweise die Erhöhungen der Fördergeschwindigkeit v_{d}(x) und des Schweißstroms I(x) und die Verringerung der Schweißgeschwindigkeit vₛ(x)) bekanntgegeben werden und bei der Beurteilung der Qualität berücksichtigt werden. Beispielsweise werden aufgrund der Abweichungen der Bearbeitungsparameter ΔPᵢ(x) angepasste Grenzwerte der Qualitätsparameter Q'_{k,o}(x), Q'_{k,u}(x) für die Beurteilung der Qualität des Bearbeitungsprozesses festgelegt. Im dargestellten Beispiel würde der obere und untere Grenzwert für die Breite B'ₒ(x), B'ᵤ(x) der Schweißnaht N und der obere und untere Grenzwert für die Höhe H'ₒ(x), H'ᵤ(x) der Schweißnaht N an die geänderten Schweißparameter angepasst werden. Dadurch wird richtigerweise auch das geänderte Bearbeitungsergebnis R'(x) bzw. die geänderte Schweißnaht N' im rechten Teil der Figur 4 hinsichtlich der Qualität positiv beurteilt, da die Bedingungen B'ᵤ(x) < B' < B'ₒ(x) und H'ᵤ(x) < H' < H'ₒ(x) erfüllt sind. Durch die automatische Berücksichtigung der bewusst vorgenommenen Änderungen der Bearbeitungsparameter ΔPᵢ(x) bei der Qualitätsüberwachung kann somit das Werkstück W auch in diesem Fall richtigerweise als "IO" klassifiziert werden und kann eine manuelle Überprüfung des Werkstücks W unterbleiben.

Die angepassten Grenzwerte der Qualitätsparameter Q'_{k,o}(x), Q'_{k,u}(x) bei Abweichungen der Bearbeitungsparameter ΔPᵢ(x) können so wie die ursprünglichen Grenzwerte der Qualitätsparameter Q_{k,o}(x), Q_{k,u}(x) für die normalen Bearbeitungsparameter Pᵢ(x) in Tabellen oder nach bestimmten Vorschriften abgelegt und gespeichert sein. Zwischen den gespeicherten Werten liegende Bearbeitungsparameter Pᵢ(x) sowie Grenzwerte der Qualitätsparameter Q_{k,o}(x), Q_{k,u}(x) können durch Interpolationsverfahren ermittelt werden. Das Qualitätsbeurteilungssystem hat Zugriff auf diese Daten, unabhängig davon an welcher Stelle diese vorliegen oder gespeichert sind. Anstelle eines oberen und unteren Grenzwerts der Qualitätsparameter Q_{k,o}(x), Q_{k,u}(x) kann auch ein Qualitätsparameter-Mittelwert Q_{k,m}(x) und eine maximale Qualitätsparameter-Schwankungsbreite ΔQₖ um diesen Mittelwert zur Beurteilung der Qualität des Bearbeitungsergebnisses R(x) herangezogen werden.

## Patentansprüche

1. Verfahren zur Qualitätsbeurteilung eines Bearbeitungsprozesses, bei dem ein Werkstück (W) mit bestimmten Bearbeitungsparametern (Pᵢ(x)) entlang einer Bearbeitungsbahn (X) bearbeitet wird, wobei das Bearbeitungsergebnis (R(x)) des Bearbeitungsprozesses entlang der Bearbeitungsbahn (X) mit zumindest einem Sensor (2) vermessen und zumindest ein Sensorsignal (Sⱼ(x)) aufgenommen wird und aus zumindest einem Sensorsignal (Sⱼ(x)) zumindest ein Qualitätsparameter (Qₖ(x)) ermittelt wird und der zumindest eine Qualitätsparameter (Qₖ(x)) zur Beurteilung der Qualität des Bearbeitungsergebnisses (R(x)) des Bearbeitungsprozesses entlang der Bearbeitungsbahn (X) mit vorgegebenen Qualitätsparameter-Grenzwerten (Q_{k,o}(x), Q_{k,u}(x)) verglichen wird, **dadurch gekennzeichnet, dass** bei der Beurteilung der Qualität des Bearbeitungsprozesses vorgenommene Abweichungen der Bearbeitungsparameter (ΔPᵢ(x)) von den Sollwerten der Bearbeitungsparameter (P_{i,soll}(x)) während der Bearbeitung des Werkstücks (W) entlang der Bearbeitungsbahn (X) automatisch berücksichtigt werden, indem die Qualitätsparameter-Grenzwerte (Q'_{k,o}(x), Q'_{k,u}(x)) an die Abweichungen der Bearbeitungsparameter (ΔPᵢ(x)) angepasst werden.

2. Verfahren nach Anspruch 1, **dadurch gekennzeichnet, dass** die vorgenommenen Abweichungen der Bearbeitungsparameter (ΔPᵢ(x)) von den Sollwerten während der Bearbeitung des Werkstücks (W) entlang der Bearbeitungsbahn (X) durch Vergleich der übermittelten Istwerte der Bearbeitungsparameter (P_{i,ist}(x)) und übermittelten Sollwerte der Bearbeitungsparameter (P_{i,soll}(x)) ermittelt werden.

3. Verfahren nach Anspruch 1 oder 2, **dadurch gekennzeichnet, dass** die vorgenommenen Abweichungen der Bearbeitungsparameter (ΔPᵢ(x)) von den Sollwerten der Bearbeitungsparameter (P_{i,soll}(x)) und/oder die übermittelten Istwerte der Bearbeitungsparameter (P_{i,ist}(x)) und/oder die übermittelten Sollwerte der Bearbeitungsparameter (P_{i,soll}(x)) während der Bearbeitung des Werkstücks (W) entlang der Bearbeitungsbahn (X) aufgezeichnet und später zur automatischen Berücksichtigung bei der Beurteilung der Qualität des Bearbeitungsprozesses entlang der Bearbeitungsbahn (X) herangezogen werden.

4. Verfahren nach einem der Ansprüche 1 bis 3, **dadurch gekennzeichnet, dass** die an die Abweichungen der Bearbeitungsparameter (ΔPᵢ(x)) angepassten Qualitätsparameter-Grenzwerte (Q'_{k,o}(x), Q'_{k,u}(x)) aus gespeicherten Qualitätsparameter-Grenzwerten (Q_{k,o,g}(x), Q_{k,u,g}(x)) für bestimmte Bearbeitungsparameter (Pᵢ(x)) ermittelt werden.

5. Verfahren nach Anspruch 4, **dadurch gekennzeichnet, dass** die gespeicherten Qualitätsparameter-Grenzwerte (Q_{k,o,g}(x), Q_{k,u,g}(x)) aus Testbearbeitungsprozessen bei bestimmten Bearbeitungsparametern (Pᵢ(x)) ermittelt werden.

6. Verfahren nach Anspruch 4 oder 5, **dadurch gekennzeichnet, dass** die an die Abweichungen der Bearbeitungsparameter (ΔPᵢ(x)) angepassten Qualitätsparameter-Grenzwerte (Q'_{k,o}(x), Q'_{k,u}(x)) durch Interpolation der gespeicherten Qualitätsparameter-Grenzwerte (Q_{k,o,g}(x), Q_{k,u,g}(x)) für bestimmte Bearbeitungsparameter (Pᵢ(x)) ermittelt werden.

7. Verfahren nach einem der Ansprüche 1 bis 6, **dadurch gekennzeichnet, dass** bei der Ermittlung zumindest eines Qualitätsparameters (Qₖ(x)) aus zumindest einem Sensorsignal (Sⱼ(x)) die Abweichung zumindest eines Bearbeitungsparameters (ΔPᵢ(x)) berücksichtigt wird.

8. Verfahren nach einem der Ansprüche 1 bis 7, **dadurch gekennzeichnet, dass** bei der Beurteilung der Qualität des Bearbeitungsprozesses zusätzliche Umgebungsparameter (UPᵢ, UPᵢ(x)), wie zum Beispiel die Werkstücktemperatur, Umgebungstemperatur, Luftfeuchtigkeit, oder dgl. berücksichtigt werden.

9. Verfahren nach einem der Ansprüche 1 bis 8, **dadurch gekennzeichnet, dass** das Bearbeitungsergebnis R(x) entlang der Bearbeitungsbahn (X) mithilfe nicht zerstörender Messmethoden, beispielsweise optischen Sensoren (3), insbesondere Laserscannern, Kameras (4) oder dgl., Röntgensensoren (5), und bzw. oder Temperatursensoren (6) vermessen und zumindest ein Sensorsignal (Sⱼ(x)) aufgenommen wird.

10. Verfahren nach einem der Ansprüche 1 bis 9, **dadurch gekennzeichnet, dass** das Bearbeitungsergebnis R(x) entlang der Bearbeitungsbahn (X) mithilfe zerstörender Messmethoden, beispielsweise durch Anfertigung von Schnitten durch das Werkstück (W) an verschiedenen Stellen entlang der Bearbeitungsbahn (X) und Anfertigen von Bildern der Oberfläche der Schnitte vermessen und zumindest ein Sensorsignal (Sⱼ(x)) aufgenommen wird.

11. Verfahren nach einem der Ansprüche 1 bis 10, **dadurch gekennzeichnet, dass** das Bearbeitungsergebnis R(x) entlang der Bearbeitungsbahn (X) während der Bearbeitung des Werkstücks (W) mit dem zumindest einen Sensor (2) vermessen wird, wobei die Geschwindigkeit der Vermessung der Bearbeitungsbahn (X) vorzugsweise der Bearbeitungsgeschwindigkeit entspricht.

12. Verfahren nach einem der Ansprüche 1 bis 10, **dadurch gekennzeichnet, dass** das Bearbeitungsergebnis R(x) entlang der Bearbeitungsbahn (X) nach Fertigstellung der Bearbeitung des Werkstücks (W) mit zumindest einem Sensor (2) vermessen wird, wobei die Geschwindigkeit der Vermessung der Bearbeitungsbahn (X) vorzugsweise größer als die Bearbeitungsgeschwindigkeit ist.

13. Verfahren nach einem der Ansprüche 1 bis 12, **dadurch gekennzeichnet, dass** bei Überschreiten zumindest eines Qualitätsparameters (Qₖ(x)) über einen vorgegebenen Qualitätsparameter-Grenzwert (Q_{k,o}(x), Q_{k,u}(x)) oder angepassten Qualitätsparameter-Grenzwert (Q'_{k,o}(x), Q'_{k,u}(x)) eine Warnung ausgegeben wird und bzw. oder das Überschreiten gespeichert wird.

14. Verfahren nach einem der Ansprüche 1 bis 13, **dadurch gekennzeichnet, dass** im Falle einer Schweißnaht als Bearbeitungsbahn (X) die Bearbeitungsparameter (Pᵢ(x)) des Schweißprozesses Schweißstrom (I(x)), Schweißspannung (U(x)), Fördergeschwindigkeit (v_{d}(x)) eines Schweißdrahts (7), Anstellwinkel (α(x)) eines Schweißbrenners (8) zum Werkstück (W), Relativposition eines Schweißbrenners (8) zum Werkstück (W) und bzw. oder die Schweißgeschwindigkeit (vₛ(x)) berücksichtigt werden.

15. Vorrichtung (1) zur Qualitätsbeurteilung eines Bearbeitungsprozesses eines Werkstücks (W) mit bestimmten Bearbeitungsparametern (Pᵢ(x)) entlang einer Bearbeitungsbahn (X), welche zur Durchführung des Verfahrens nach einem der Ansprüche 1 bis 14 ausgebildet ist.
